# EUROPÄISCHE PATENTSCHRIFT

(11) **EP 1 688 594 B1**
(45) Veröffentlichungstag und Bekanntmachung des Hinweises auf die Patenterteilung: **04.11.2009**
(21) Anmeldenummer: 05112033.5
(22) Anmeldetag: 13.12.2005
(51) Int. Cl.: F01L 1/047

(54) **Nockenwelle mit gegeneinander verdrehbaren Nocken für insbesondere Kraftfahrzeugmotoren**
Camshaft with cams rotatable relatively to each other, especially for vehicle engines
Arbre à cames avec des cames rotatives les unes par rapport aux autres, en particulier pour des moteurs de véhicules

(30) Priorität: 04.02.2005 DE 102005004976
(43) Veröffentlichungstag der Anmeldung: 09.08.2006
(73) Patentinhaber: Mahle International GmbH, 70376 Stuttgart (DE)
(72) Erfinder: Hoffmann, Hermann, 70599 Stuttgart (DE); Lechner, Martin, 51789 Lindlar/Frielingsdorf (DE); Schneider, Falk, 70825 Münchingen (DE)
(74) Vertreter: Bongen, Renaud & Partner

(56) Entgegenhaltungen:
- EP-A- 1 362 986
- WO-A-99/35373
- DE-A1- 3 933 923
- DE-A1- 4 306 621
- DE-A1- 4 401 011

## Beschreibung

Die Erfindung betrifft eine Nockenwelle nach dem Oberbegriff des Patentanspruchs 1.

Eine solche Nockenwelle ist beispielsweise aus DE 39 33 923 A1 bekannt. Bei dieser Nockenwelle ist das verdrehbare Nockenelement über ein an dieses radial stabförmig angeformtes Befestigungsmittel durch einen Presssitz fest mit der Innenwelle über eine dort für die Aufnahme des Befestigungsmittels vorgesehene Aufnahmebohrung verbunden. Die Erzeugung dieses Presssitzes kann zu einer Verbiegung der Achse der Innenwelle gegenüber der Außenwelle führen, wodurch die Funktionsfähigkeit der verstellbaren Nockenwelle beeinträchtigt werden kann, indem die Innenwelle nicht mehr klemmfrei gegenüber der Außenwelle verdrehbar ist.

Aus EP 1 362 986 A1 ist eine gattungsgemäße Nockenwelle mit gegeneinander verstellbaren Nocken bekannt, bei der der verstellbare Nocken über einen Hohlstift mit der Innenwelle über eine in dieser vorgesehene Bohrung verbunden wird. Ein erforderlicher Festsitz zwischen dem hohlen Befestigungsstift und der Innenwelle wird durch einen in den Hohlraum des hohlen Stiftes eingepressten Stift erreicht, durch den der Außenumfang des hohlen Stiftes aufgeweitet wird. Durch besondere Vorkehrungen bei der Herstellung einer solchen Nockenwelle kann eine Verformung der Innenwelle, die zu einem Verklemmen zwischen Innen- und Außenwelle führen könnte, an sich absolut sicher vermieden werden. Diese Vorkehrungen stellen allerdings einen Aufwand dar, der insbesondere aus Kostengründen bei dennoch sicherer Montage vermieden werden soll.

Die Erfindung beschäftigt sich mit dem Problem, eine gebaute Nockenwelle mit verstellbaren Nocken aus möglichst bereits fertig bearbeiteten Bauelementen auf einfache, rationelle Weise zu einer absolut sicher funktionstüchtigen, gattungsgemäßen Nockenwelle zu fügen.

Gelöst wird dieses Problem bereits in erster Linie durch eine Ausführung einer gattungsgemäßen Nockenwelle nach den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, einen verstellbaren Nocken beziehungsweise lediglich umfangsmäßig beschränkte Nockenelemente radial auf eine Nockenwelle aufzusetzen und ohne funktionsstörende Kraftübertragung mit Bezug auf die konzentrisch ineinanderliegenden Wellen mit der Innenwelle zu befestigen. Die Befestigungsmittel werden dabei erfindungsgemäß derart ausgebildet, dass diese unter gegenseitiger Abstützung montierbar sind, so dass in Richtung radial zur Achse der konzentrisch ineinanderliegenden Wellen der Nockenwelle keine Fügekraft wirksam werden kann.

Hierzu sind verschiedene, in den Ansprüchen angegebene Ausführungsformen alternativ und kumulativ möglich.

In vielen Fällen reicht es bereits aus, dass ein verdrehbarer Nocken lediglich aus einem einzigen Segment besteht, das lediglich einen Teilumfang der Nockenwelle umfasst. In diesen Fällen kann der Nocken aus einem Element bestehen, das die Außenwelle zumindest in dem inneren Kontaktbereich um maximal 180° umfasst, um gerade noch radial auf die Welle aufsteckbar zu sein. Dabei kann dieses Nockenelement in seinen umfangsmäßigen Endbereichen über 180° hinauskragende Außenbereiche aufweisen. Die Beschränkung auf einen Umfangswinkel von 180° bezieht sich also lediglich auf den Innenumfang des Nockenelementes, damit dieses radial auf die Außenwelle aufgesetzt werden kann.

In Fällen, in denen ein umlaufendes Nockenprofil, das heißt ein Nockenprofil mit einem Grundkreisbereich gewünscht wird, kann ein solcher Nocken aus zwei Hälften bzw. Einzelelementen zusammengesetzt sein, wobei jede Hälfte von gegenüberliegenden Seiten der Nockenwelle aus eingeführt wird. Möglich ist es auch, den Grundkreisbereich durch axial neben dem Nockenelement auf der Außenwelle aufgesetzte Ringe auszubilden.

Die Verbindung zwischen den Befestigungsmitteln untereinander und mit insbesondere der Innenwelle kann über press- und formschlüssige Anlagesitze erfolgen und/oder durch Löten, Schweißen sowie Kleben. Für einen Formschluss können Schraub- und/oder Nietmittel eingesetzt werden.

Besonders vorteilhafte, nachstehend näher erläuterte Ausführungsbeispiele sind in der Zeichnung durch jeweils einen Querschnitt durch einen Nockenbefestigungsbereich dargestellt.

In dieser zeigen
- Fig. 1: die Verbindung eines Hauptnockenelementes über einen Hohlstift mit einem in diesen eingesetzten Spannstift,
- Fig. 2: eine Ausführung nach Fig. 1, bei der der Spannstift mit einem Anschlagkopf versehen ist,
- Fig. 3: eine Ausführung nach Fig. 1 oder 2, bei der anstelle eines Spannstiftes eine Schraube eingesetzt ist,
- Fig. 4: eine Ausführung nach Fig. 3, bei der das Hauptnockenelement gegenüber der Befestigungsachse unsymmetrisch ausgebildet ist,
- Fig. 5: eine Ausführung nach Fig. 1, bei der der Spannstift mit einem Ergänzungsnockenelement verbunden ist,

- Fig. 6: die Ausführung nach Fig. 5 in vollständig montiertem Zustand mit einem aus zwei Einzelelementen bestehenden Nocken mit einer geschlossenen Nockenaußenfläche,
- Fig. 7: eine Ausführung nach Fig. 5, 6, bei der die beiden, zu einem vollständigen Nocken zusammengesetzten Nockenelemente aus einem geschlossenen Nocken durch Cracken hergestellt sind,
- Fig. 8: die Ausführung nach Fig. 7 in zusammengebautem Zustand,
- Fig. 9: ein aus zwei Teilen zusammengesetzter Nocken, bei dem der Spannstift formschlüssig in dem Ergänzungsnockenelement anliegt,
- Fig. 10: eine Ausführung nach Fig. 9 mit einer andersartigen Ausbildung des Anlagekopfes des Spannstiftes,
- Fig. 11: eine Ausführung nach den Fig. 9, 10 mit einem eingeschraubten Spannstift,
- Fig. 12: eine Ausführung nach Fig. 1 mit zwei benachbart zu dem Hauptnockenelement aufgesetzten Ringen zur Ausbildung eines Nockengrundkreisbereiches.

In der Zeichnung ist jeweils nur ein Schnitt durch einen Verbindungsbereich eines verdrehbaren Nockens beziehungsweise Haupt- und ggf. Ergänzungsnockenelementes einer Nockenwelle gezeigt. Bei einer solchen Nockenwelle sind jeweils mehrere verstellbare Nocken sowie unverstellbare Nocken vorhanden.

Die Nockenwelle umfasst zwei konzentrisch ineinanderliegende, gegeneinander verdrehbare Wellen, nämlich eine Innenwelle 1 und eine Außenwelle 2.

Ein verdrehbarer Nocken beziehungsweise ein Hauptnockenelement 3 lagert mit einer kreisförmigen Innenumfangsfläche 4 auf dem Außenumfang der Außenwelle 2. Mit der Innenwelle 1 ist das Hauptnockenelement 3 bei allen Ausführungsformen zumindest verdrehfest verbunden.

Auf die einzelnen Ausführungsformen verschiedener Befestigungsarten und Formen beziehungsweise Zusammensetzungen von Haupt- und Ergänzungsnockenelementen 3; 12 wird nachstehend mit Bezug auf die einzelnen Figuren wie folgt eingegangen.

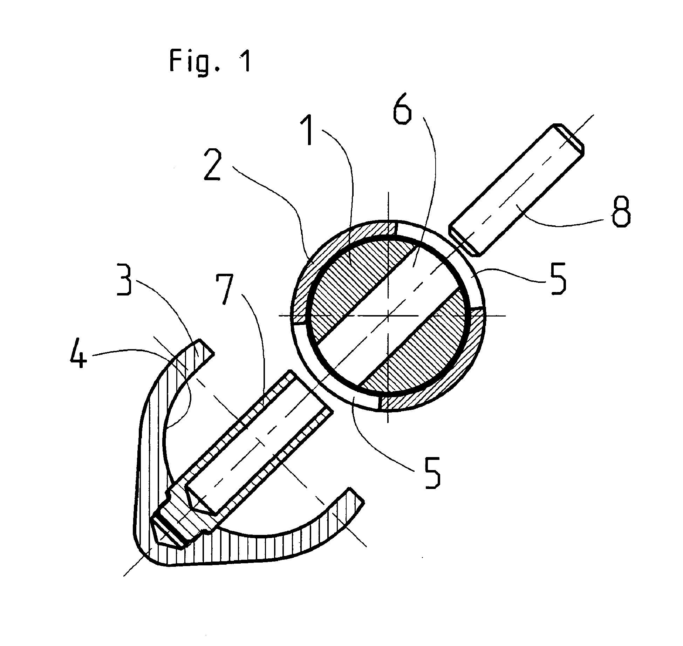

### Ausführung nach Fig. 1

Das Nockenelement 3 besitzt eine Innenumfangsfläche 4 die sich in Umfangsrichtung auf einen Winkel von maximal 180° mit Kreiskrümmung beschränkt. Ein über 180° hinausgehender Umfangsbereich besitzt keine mit dem Außenumfang der Außenwelle 2 kontaktierenden Innenumfangsflächen. Anderenfalls wäre das Hauptnockenelement 3 nicht radial zur Wellenachse montierbar.

In der Außenwelle 2 sind langlochartige Ausnehmungen 5 vorgesehen, die einer Durchgangsbohrung 6 in der Innenwelle 1 zugeordnet sind.

Zur Befestigung des Hauptnockenelementes 3 ist mit diesem fest verbunden ein Befestigungsmittel 7, dessen freier Endbereich hohl ausgebildet ist. Dieses hohle Befestigungsmittel 7 wird zum Zwecke der Befestigung mit der Innenwelle 1 in deren Durchgangsbohrung 6 kraftfrei in einer Art Schiebepassung eingeschoben. Von der anderen Seite aus wird ein Passstift als Verschlussmittel 8 in die Öffnung des hohlen Befestigungsmittels 7 eingepresst. Die zum Einpressen aufzubringende Kraft wirkt auf die Innenwelle 1 in Richtung radial zur Durchgangsbohrung 6. Dies bedeutet, dass durch die für die Befestigung aufzubringenden Kräfte keine Axialkraftkomponente auf die konzentrisch ineinanderliegenden Wellen, nämlich die Innen- und die Außenwelle 1, 2 wirkt, die diese Wellen gegeneinander verbiegen könnte.

Das Fügen des Nockenelementes 3 hat derart zu erfolgen, dass zwischen der Innenumfangsfläche 4 und der Außenfläche der Außenwelle 2 ein ausreichendes Spiel für ein Verdrehen des Nockenelementes 3 auf der Außenwelle 2 gewährleistet ist.

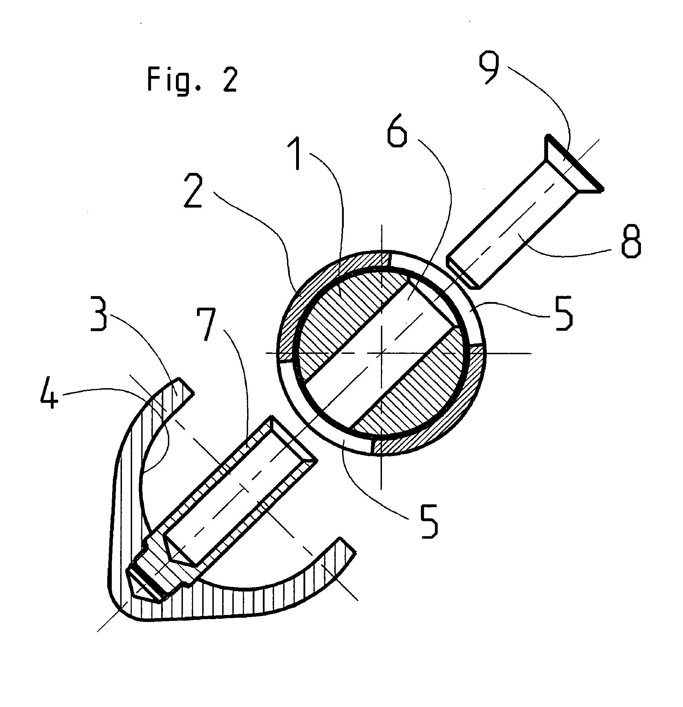

### Ausführung nach Fig. 2

Diese Ausführung unterscheidet sich von derjenigen nach der Fig. 1 lediglich durch eine andersartige Ausbildung des Spannstiftes 8, der hier mit einem Anschlagkopf 9 versehen ist, mit dem er in montiertem Zustand formschlüssig in den Eintrittsbereich der Durchgangsbohrung 6 der Innenwelle 1 anliegt.

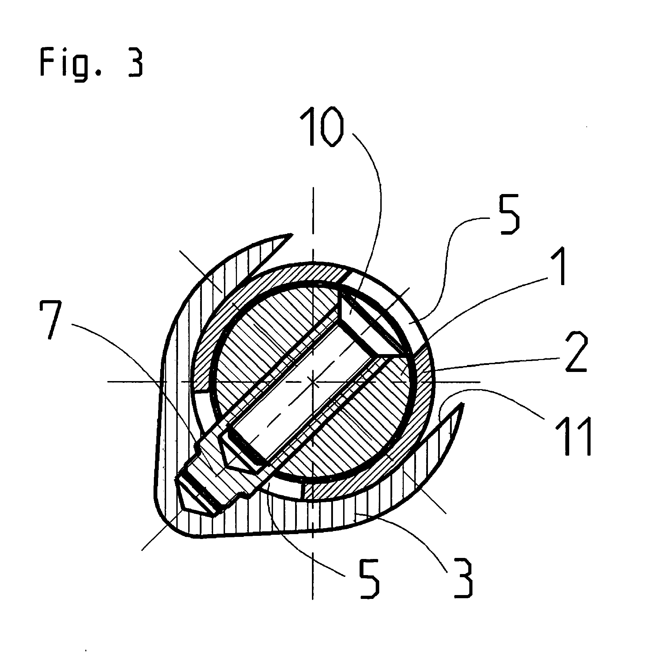

### Ausführung nach Fig. 3

Der Spannstift nach der Ausführung in Fig. 2 ist hier durch eine Spannschraube 10 ersetzt, die in eine innerhalb des Befestigungsmittels 7 vorgesehene Gewindebohrung einschraubbar ist. Die Spannschraube 10 und die zugehörige Gewindebohrung können komplementär aufeinander abgestimmt konisch ausgebildet sein. Dabei ist es möglich, das Gewinde nur in einem dem freien Ende des Befestigungsmittels 7 zugewandten Bereich vorzusehen, während der übrige Bereich zwar konisch, jedoch gewindefrei ausgebildet ist. Bei einer solchen Ausführung kann der Gewindebereich als solcher in üblicher Weise kreiszylindrisch ausgestaltet sein. Das Aufweiten erfolgt dann lediglich in dem konischen Bereich, der innerhalb der Innenwelle 1 liegen muss, um dort den gewünschten Presssitz erzielen zu können.

Radiale Ausnehmungen 11 ermöglichen eine über 180° hinausgehende, äußere Nockenausformung bei dennoch gegebener Montierbarkeit des Hauptnockenelementes 3.

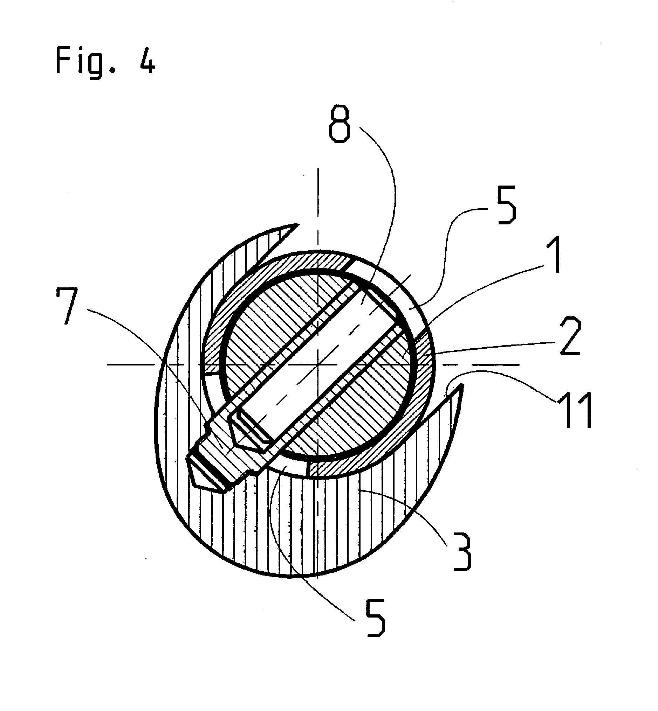

### Ausführung nach Fig. 4

Bei dieser Ausführung ist als Verschlusselement ein Spannstift 8 in der Ausführung nach Fig. 1 eingesetzt. Der Spannstift 8 ragt in montiertem Zustand nicht über die Außenfläche der Innenwelle 1 hinaus. Dadurch benötigt die zugeordnete Ausnehmung 5 in der Außenwelle 2 in Umfangsrichtung lediglich eine Länge, die ein Montieren des Spannstiftes 8 ermöglicht. Bei einem Drehen der Innenwelle 1 gegenüber der Außenwelle 2 verbleibt der Spannstift 8 innerhalb der Innenumfangsfläche der Außenwelle 2, das heißt für die Drehbewegung der Innenwelle 1 relativ zu der Außenwelle 2 ist die Größe der Ausnehmung 5 nicht relevant.

Bei dieser Ausführung besitzt das Hauptnockenelement 3 einen zu der Achse des Befestigungsmittels 7 unsymmetrische Form.

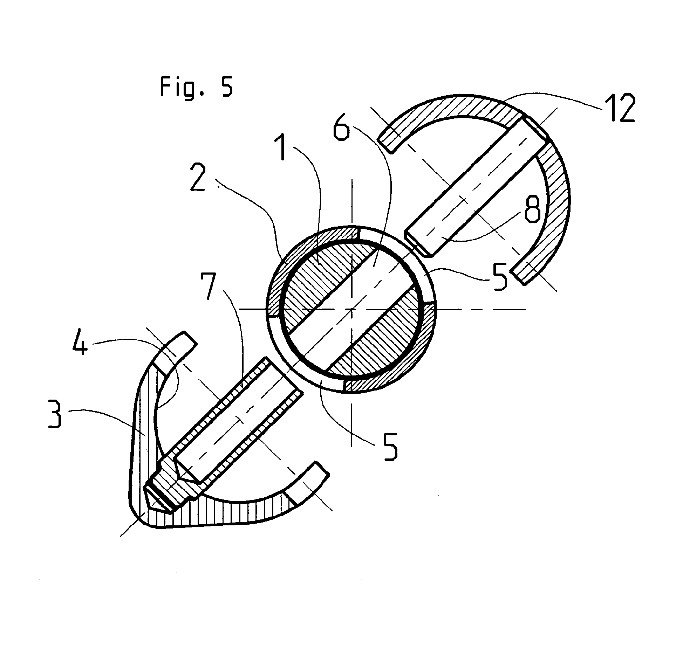

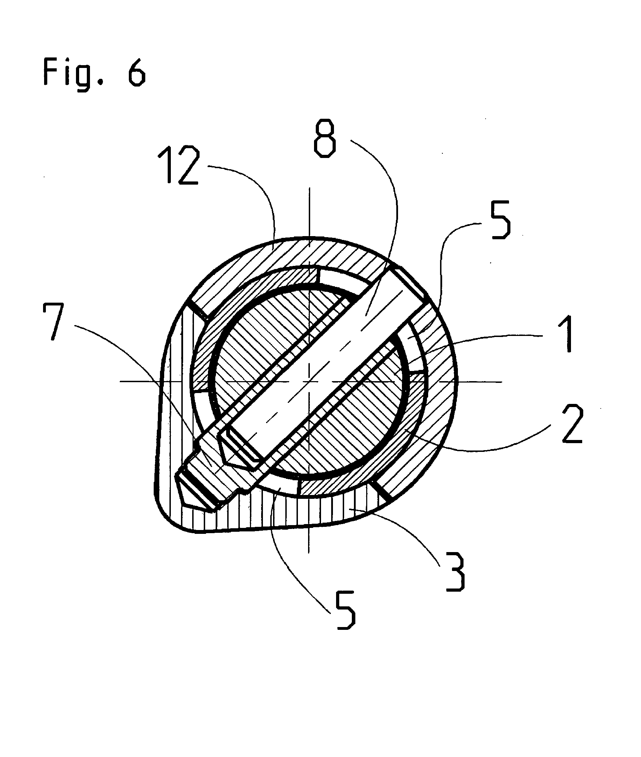

### Ausführung nach Fig. 5 und 6

Von der Ausführung nach Fig. 1 unterscheidet sich diese Ausführung insbesondere dadurch, dass mit dem Spannstift 8 als Verschlusselement ein Ergänzungsnockenelement 12 fest verbunden ist. In montiertem Zustand von Hauptnockenelement 3 und Ergänzungsnockenelement 12 liegt ein umfangsmäßig geschlossener, aus zwei zusammengesetzten Elementen bestehender Nocken mit einem Grundkreisbereich vor.

Ein Festsitz zwischen dem Befestigungsmittel 7 und der Innenwelle 1 ist durch eine radiale Aufweitung des Befestigungsmittels 7 möglich, jedoch nicht erforderlich. Nicht erforderlich ist dieser zusätzliche Fest-, d.h. Presssitz, wenn Haupt- und Ergänzungsnockenelement 3, 12 einen Formschluss derart bilden, dass ein vorgegebenes Bewegungsspiel für den aus Haupt- und Ergänzungsnocken 3, 12 zusammengesetzten Nocken gegenüber der Außenwelle 2 festgelegt ist.

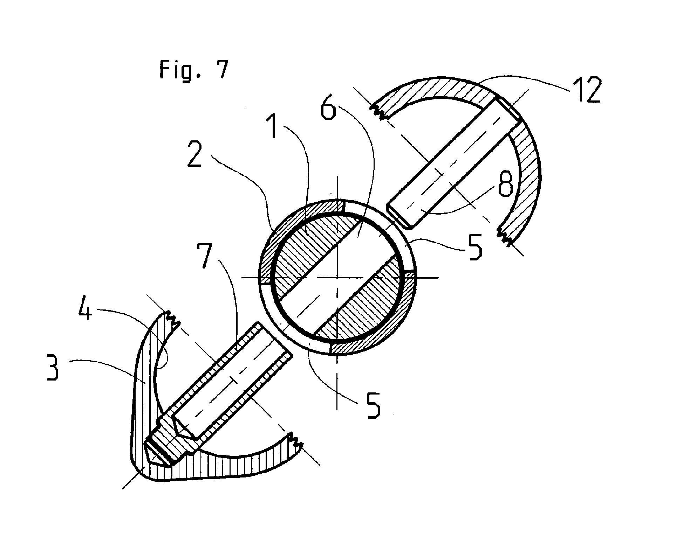

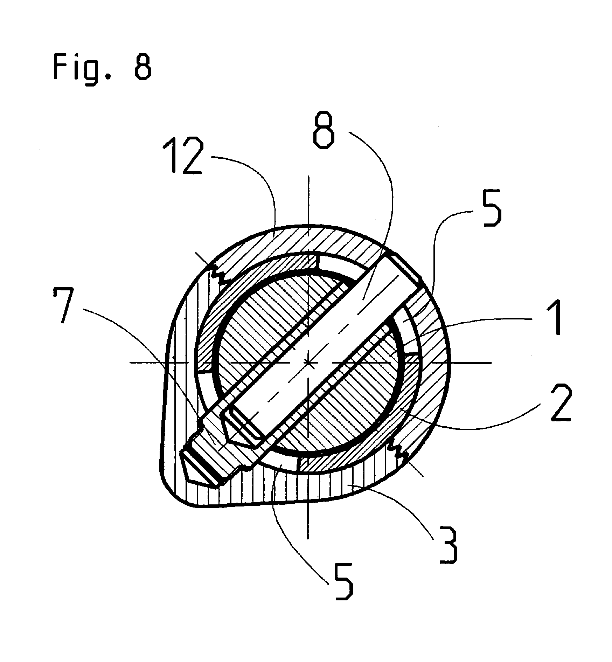

### Ausführung nach Fig. 7 und 8

Diese Ausführung unterscheidet sich von derjenigen nach Fig. 5 und 6 lediglich dadurch, dass das Hauptnockenelement 3 sowie das Ergänzungsnockenelement 12 durch Cracken eines zunächst geschlossen hergestellten Nockens erzeugt worden sind. Für ein entsprechendes Cracken ist der geschlossen hergestellte Nocken in den Crackbereichen mit, den Crackvorgang auslösenden Kerben versehen.

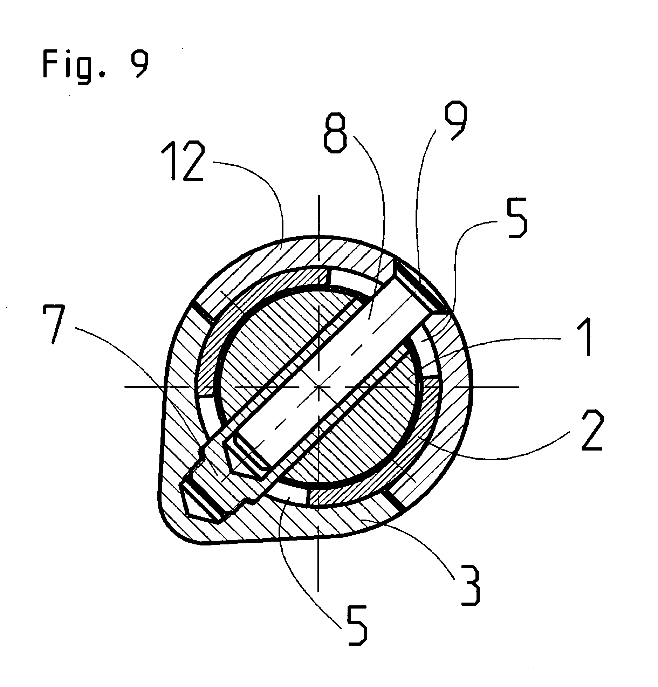

### Ausführung nach Fig. 9

Bei dieser Ausführung stützt sich der Spannstift 8 bei einer Nockenausführung in der Art nach Fig. 7, 8 durch formschlüssige Anlage über einen Anschlagkopf 9 an dem Ergänzungsnockenelement 3 ab.

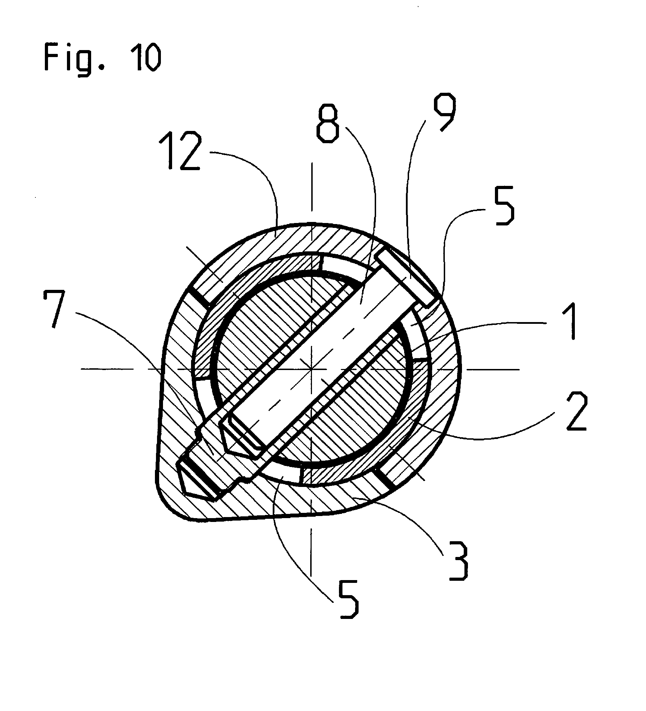

### Ausführung nach Fig. 10

Ein Unterschied gegenüber der Ausführung nach Fig. 9 besteht lediglich in einer andersartigen Ausbildung des Anschlagkopfes 9 des Spannstiftes 8.

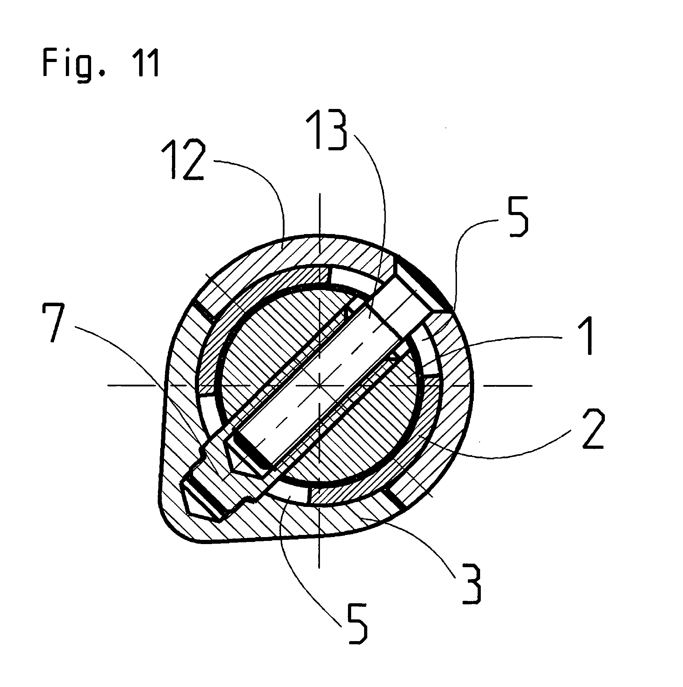

### Ausführung nach Fig. 11

Bei dieser Ausführung ist ein Spannstift 8 in das Befestigungsmittel 7 eingeschraubt, wobei sich ein Schraubenkopf 13 dieser Spannstift-Schraube an dem Ergänzungs-Nockenelement 12 formschlüssig abstützt.

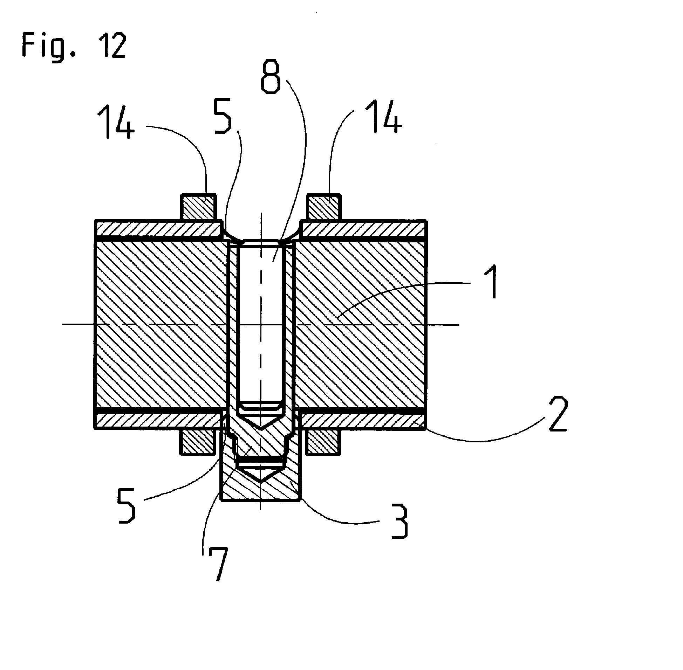

### Ausführung nach Fig. 12

Das Hauptnockenelement 3 und dessen Art der Befestigung an der Innenwelle 1 entsprechen der Ausführung in Fig. 1. Zusätzlich sind bei dieser Ausführung vorgesehen zwei das Hauptnockenelement 3 zwischen sich einschließende, auf die Außenwelle 2 aufgeschobene Ringe 13, durch die das Hauptnockenelement 3 durch einen Grundkreisbereich funktionell ergänzt wird.

## Patentansprüche

1. Nockenwelle mit gegeneinander verdrehbaren Nocken für insbesondere Kraftfahrzeugmotoren, bei der
- eine Innen- und eine Außenwelle (1; 2) konzentrisch und gegeneinander verdrehbar ineinander angeordnet sind,
- mindestens ein Nocken aus mindestens einem auf die Außenwelle (2) radial aufsetzbaren, auf dieser drehbar lagernden Haupt-Nockenelement (3) besteht,
- das Hauptnockenelement (3) über ein eine Ausnehmung (5) in der Außenwelle (2) durchgreifendes Befestigungsmittel (7) zumindest drehfest mit der Innenwelle (1) verbunden ist,
**gekennzeichnet durch** die Merkmale,
- das Befestigungsmittel (7) ragt stiftförmig nach radial innen von der Innenumfangsfläche (4) des Hauptnockenelementes (3) ab und besitzt zumindest in seinem frei abragenden Endbereich eine radial zur Innenumfangsfläche (4) des Hauptnockenelementes (3) ausgerichtete, zu dem freien Ende hin offene Ausnehmung,
- das auf der Außenwelle (2) lagernde Hauptnockenelement (3) greift mit seinem Befestigungsmittel (7) in eine gegenüber dem Außenumfang dieses Befestigungsmittels (7) komplementär geformte Durchgangsöffnung (6) in der Innenwelle (1) ein,
- von der dem Hauptnockenelement (3) radial gegenüberliegenden Seite aus ragt ein, eine zugeordnete Ausnehmung (5) in der Außenwelle (2) durchgreifendes Verschlussmittel (8) in die Ausnehmung des Befestigungsmittels (7) ein,
- die Befestigung des Hauptnockenelementes (3) mit der Innenwelle (1) ist gegeben über eine der folgenden Ausführungen, nämlich
- eine Aufweitung des Außendurchmessers des Befestigungsmittels (7) **durch** das Verschlussmittel (8) mit einer daraus resultierenden Festsitzverbindung zwischen Befestigungsmittel (7) und Innenwelle (1) einerseits und Befestigungsmittel (7) und Verschlussmittel (8) andererseits, wobei das Verschlussmittel (8) mit einem Ergänzungsnockenelement (12) verbunden sein kann,
- einen Festsitz zwischen Verschluss- und Befestigungsmittel (8; 7) einerseits und andererseits einen radial zwischen Innenwelle (1) und dem Befestigungsmittel (7) gegebenen Formschluss **durch** radial einseitige Anlage des des Befestigungsmittels (7) an der Innenwelle (1),
- einen Festsitz zwischen Verschluss- und Befestigungsmittel (8; 7) einerseits und andererseits einen Formschluss zwischen dem Hauptnockenelement (3) und einem sich an dem Hauptnockenelement (3) abstützenden ErgänzungsNockenelement (12), das wiederum das Verschlussmittel (8) hält.

2. Nockenwelle nach Anspruch 1,
**dadurch gekennzeichnet,**
**dass** das Ergänzungsnockenelement (12) zusammen mit dem Hauptnockenelement (3) einen die Außenwelle (2) vollständig umschließenden, mit der Innenwelle (1) zumindest drehfest verbundenen, gegenüber der Außenwelle (2) verdrehbar gelagerten Verstell-Nocken mit einer geschlossen umlaufenden Nockenaußenfläche bildet.

3. Nockenwelle nach Anspruch 1 oder 2,
**dadurch gekennzeichnet,**
**dass** das Hauptnockenelement (3) mit einem Umfangswinkel von maximal 180° die Außenwelle kontaktiert, während ihr Außenumfang sich über einen über diesen Kontakt-Winkel hinausgehenden Umfangswinkel erstreckt.

4. Nockenwelle nach Anspruch 1,
**dadurch gekennzeichnet,**
**dass** beiderseitig neben dem Hauptnockenelement (3) in axialer Richtung benachbart zwei Ringe (14) auf die Außenwelle (2) gefügt sind, welche die Funktion des Nockengrundkreis übernehmen.

5. Nockenwelle nach einem der vorhergehenden Ansprüche,
**dadurch gekennzeichnet,**
**dass** ein Festsitz zwischen Verschluss- und Befestigungsmittel (7; 8) durch eine Schraubverbindung gegeben ist, wozu das Verschlussmittel (8) als Schraube (10, 13) und das Befestigungsmittel (7) als Gewindebohrung zur Aufnahme der Schraube (10, 13) ausgebildet sind.

6. Nockenwelle nach Anspruch 5,
**dadurch gekennzeichnet,**
**dass** die Schraube (10, 13) und die Gewindebohrung innerhalb des Befestigungsmittels (7) komplementär aufeinander abgestimmt konisch ausgebildet sind.

7. Nockenwelle nach Anspruch 6,
**dadurch gekennzeichnet,**
**dass** der Gewindebereich lediglich einen dem freien Ende des Befestigungsmittels zugewandten Bereich erfasst, während der übrige Bereich konisch, jedoch gewindefrei ausgebildet ist.

8. Nockenwelle nach Anspruch 7,
**dadurch gekennzeichnet,**
**dass** der Gewindebereich kreiszylindrisch ausgeführt ist.

9. Nockenwelle nach einem der vorhergehenden Ansprüche,
**dadurch gekennzeichnet,**
**dass** bei einem sich aus einem Haupt- und einem Ergänzungsnockenelement (3, 12) zusammensetzenden umfangsmäßig geschlossenes Nockenelement die zusammengesetzten Nockenelemente (3, 12) durch Cracken aus einem ursprünglich einstückig geschlossenen Nockenring erzeugt worden sind.

## Claims

1. A camshaft having cams, which are rotatable against one another, for motor vehicles in particular, in which
- an internal and an external shaft (1; 2) that are arranged in one another concentrically as well as rotatable against one another,
- at least one cam consists of a primary cam that is radially attachable to the external shaft (2) and is furthermore rotatably mounted thereon,
- the primary cam element (3) is connected at least in a rotationally-fixed manner to the internal shaft (1) by means of fastening means (7) that passes through a recess (5) in the external shaft (2),
**characterised by** the features
- the fastening means (7) projects in a pin-shaped manner radially inward from the interior circumferential surface (4) of the primary cam element (3) and possesses, at least in its freely protruding end region, a recess that is radially directed toward the internal circumferential surface (4) of the primary cam element (3) and that is furthermore open towards the free end,
- the primary cam element (3) that is mounted on the external shaft (2) engages with its fastening means (7) a complementarily-shaped through opening (6), which is opposite the external circumference of said fastening means (7), in the internal shaft (1),
- from the side radially opposite the primary cam element (3), a locking means (8), which passes through an associated recess (5) in the external shaft (2), protrudes into the recess of the fastening means (7),
- the fastening of the primary cam element (3) to the internal shaft (1) is realised by means of one of the following configurations, namely
- a widening of the external diameter of the fastening means (7) through the locking means (8) with an interference fit connection resulting between the fastening means (7) and the internal shaft (1), on the one hand, and between the fastening means (7) and the locking means (8), on the other hand, wherein the locking means (8) can be connected to a supplementary cam element (12),
- an interference fit between locking means and fastening means (8; 7) on the one hand, and on the other a radial form fit being realised between internal shaft (1) and the fastening means (7) by means of radial, one-sided attachment of the fastening means (7) to the internal shaft (1),
- an interference fit between locking and fastening means (8; 7) on the one hand and, on the other, a form fit between the primary cam element (3) and a supplementary cam element (12) supported on the primary cam element (3), said supplementary cam element in turn holding the locking means (8).

2. The camshaft as specified in claim 1,
**characterised in that**
the supplementary cam element (12) forms together with the primary cam element (3) as adjusting cam, which entirely encloses the external shaft (2) and is connected in at least a rotationally-fixed manner to the internal shaft (1) and furthermore is rotatably mounted with regard to the external shaft (2), with a closed, circumferential cam exterior surface.

3. The camshaft as specified in claim 1 or claim 2,
**characterised in that**
the primary cam element (3) is in contact with the external shaft with a circumferential angle of maximally 180°, while its external circumference extends over a circumferential angle exceeding this contact angle.

4. The camshaft as specified in claim 1,
**characterised in that**
on both sides alongside the primary cam element (3), two rings (14) are joined on the external shaft (2) adjacently in the axial direction, which rings assume the function of the cam heel.

5. The camshaft as specified in any one of the preceding claims,
**characterised in that**
an interference fit is realised between locking and fastening means (7; 8) by means of a screwed connection, the locking means (8) being configured as a screw (10, 13), and the fastening means (7) being configured as a threaded bore hole for receiving the screw (10, 13).

6. The camshaft as specified in claim 5
**characterised in that**
the screw (10, 13) and the threaded bore hole are configured within the fastening means (7) as conically complementarily aligned to one another.

7. The camshaft as specified in claim 6,
**characterised in that**
the threaded region includes only one region facing toward the free end of the fastening means, while the other region is configured conically, yet free of threads.

8. The camshaft as specified in claim 7
**characterised in that**
the threaded region is configured circularly-cylindrically.

9. The camshaft as specified in any one of the preceding claims,
**characterised in that**
in a cam element that is circumferentially closed and is composed of a primary and a supplementary cam element (3, 12), the assembled cam elements (3, 12) have been generated by cracking from an originally closed cam ring consisting of one integral piece.

## Revendications

1. Arbre à cames comportant des cames déplaçables en rotation les unes contre les autres notamment pour moteurs de véhicules automobiles, dans lequel
- un arbre intérieur et un arbre extérieur (1 ; 2) sont disposés concentriquement l'un dans l'autre et déplaçables en rotation l'un contre l'autre,
- au moins une came est constituée d'au moins un élément de came principal (3) pouvant être posé radialement sur l'arbre extérieur (2), se positionnant rotativement sur celui-ci,
- l'élément de came principal (3) est relié au moins de manière solidaire en rotation à l'arbre intérieur (1) par l'intermédiaire d'un moyen de fixation (7) traversant une cavité (5) dans l'arbre extérieur (2),
**caractérisé par** les caractéristiques
- le moyen de fixation (7) dépasse en forme de goupille radialement vers l'intérieur depuis la surface circonférentielle intérieure (4) de l'élément de came principal (3) et possède au moins dans sa zone d'extrémité saillant à découvert une cavité ouverte en allant vers l'extrémité libre, orientée radialement par rapport à la surface circonférentielle intérieure (4) de l'élément de came principal (3),
- l'élément de came principal (3) se positionnant sur l'arbre extérieur (2) vient en prise dans l'arbre intérieur (1) par son moyen de fixation (7) dans une ouverture traversante (6) de forme complémentaire par rapport à la circonférence extérieure de ce moyen de fixation,
- depuis le côté radialement opposé à l'élément de came principal (3) dépasse dans la cavité (5) du moyen de fixation (7) un moyen d'obturation (8) traversant une cavité (8) coordonnée dans l'arbre extérieur (2),
- la fixation de l'élément de came principal (3) avec l'arbre intérieur (1) est induite par une des configurations suivantes, à savoir
- un élargissement du diamètre extérieur du moyen de fixation (7) du fait du moyen d'obturation (8) avec une liaison d'ajustement avec serrage en résultant entre le moyen de fixation (7) et l'arbre intérieur (1) d'une part et le moyen de fixation (7) et le moyen d'obturation (8) d'autre part, moyennant quoi le moyen d'obturation (8) peut être relié à un élément de came complémentaire (12),
- un ajustement avec serrage entre le moyen d'obturation et le moyen de fixation (8 ; 7) d'une part et d'autre part une conjonction de forme induite entre l'arbre intérieur (1) et le moyen de fixation (7) du fait que le moyen de fixation (7) vient reposer radialement d'un côté sur l'arbre intérieur (1),
- un ajustement avec serrage entre le moyen d'obturation et le moyen de fixation (8 ; 7) d'une part et d'autre part une conjonction de forme entre l'élément de came principal (3) et un élément de came complémentaire (12) s'appuyant sur l'élément de came principal (3), qui maintient à son tour le moyen d'obturation (8).

2. Arbre à cames selon la revendication 1,
**caractérisé en ce que**
l'élément de came complémentaire (12) conjointement à l'élément de came principal (3) forme une came de réglage entourant complètement l'arbre extérieur (2), reliée au moins de manière solidaire en rotation à l'arbre intérieur (1), positionnée de manière déplaçable en rotation par rapport à l'arbre extérieur (2) avec une surface extérieure de came fermée en faisant le tour.

3. Arbre à cames selon la revendication 1 ou 2,
**caractérisé en ce que**
l'élément de came principal (3) contacte avec un angle circonférentiel d'au maximum 180° l'arbre extérieur, alors que sa circonférence extérieure s'étend sur un angle circonférentiel dépassant cet angle de contact.

4. Arbre à cames selon la revendication 1,
**caractérisé en ce que**
des deux côtés à côté de l'élément de came principal (3) en étant adjacentes dans la direction axiale, deux bagues (14) sont assemblées sur l'arbre extérieur (2), lesquelles remplissent la fonction de cercle de base de came.

5. Arbre à cames selon une des revendications précédentes,
**caractérisé en ce que**
un ajustement avec serrage entre le moyen d'obturation et le moyen de fixation (7 ; 8) est induit par une liaison par vissage, à quelle fin le moyen d'obturation (8) est configuré comme une vis (10, 13) et le moyen de fixation (7) est configuré comme un alésage fileté pour recevoir la vis (10, 13).

6. Arbre à cames selon la revendication 5,
**caractérisé en ce que**
les vis (10, 13) et l'alésage fileté sont configurés à l'intérieur du moyen de fixation (7) en forme conique harmonisée complémentairement l'une à l'autre.

7. Arbre à cames selon la revendication 6,
**caractérisé en ce que**
la zone de filetage absorbe uniquement une zone tournée vers l'extrémité libre du moyen de fixation, alors que le reste de la zone a une configuration conique, néanmoins exempte de filetage.

8. Arbre à cames selon la revendication 7,
**caractérisé en ce que**
la zone de filetage a une configuration cylindrique.

9. Arbre à cames selon une des revendications précédentes,
**caractérisé en ce que**
dans un élément de came fermé circonférentiel composé d'un élément de came principal et d'un élément de came complémentaire (3, 12), les éléments de came (3, 12) assemblés ont été produits par craquage d'un anneau de came original fermé en un seul tenant.
